# EUROPEAN PATENT APPLICATION

(11) **EP 4 622 055 A1**
(43) Date of publication of application: **24.09.2025**
(21) Application number: 24165611.5
(22) Date of filing: 22.03.2024
(51) Int. Cl.: H02J 13/00

(54) **SUBSTATION AUTOMATION ENGINEERING SYSTEM**

(71) Applicant: ABB SCHWEIZ AG, 5400 Baden (CH)
(72) Inventor: SIVANTHI, Thanikesavan, 5303 Würenlingen (CH); KOZIOLEK, Heiko, 76227 Karlsruhe (DE); SCHOCH, Nicolai, 69120 Heidelberg (DE); SCHOENBORN, Sandro, 4059 Basel (CH)
(74) Representative: Maiwald GmbH

(57) **Abstract**

The present invention relates to a substation automation engineering system, comprising:
- an input unit (10); and
- a processing unit (20);

wherein the input unit is configured to receive a base query, wherein the base query comprises details of a substation project;
wherein the input unit is configured to provide the base query to the processing unit;
wherein the processing unit is configured to determine one or more files in a database (30), the determination comprising searching the database (30) to select the one or more files comprising utilization of the base query; and
wherein the processing unit is configured to determine configuration description information for the substation project, the determination comprising utilization of the base query and the one or more files.

## Description

### FIELD OF THE INVENTION

The present invention relates to a substation automation engineering system, a substation automation engineering deployment and validation system, a substation automation engineering method, a substation automation engineering deployment and validation method, as well as a computer program element.

### BACKGROUND OF THE INVENTION

Any substation project, whether new or retrofitted, starts with a call for bids addressed to different substation automation vendors. The substation automation vendors then submit their bid documents. If the project is awarded, then the detailed engineering of the substation system configuration begins followed by the configuration of the Intelligent Electronic Devices (lEDs). This is a complex process with multiple design and engineering tasks carried with help of experts.

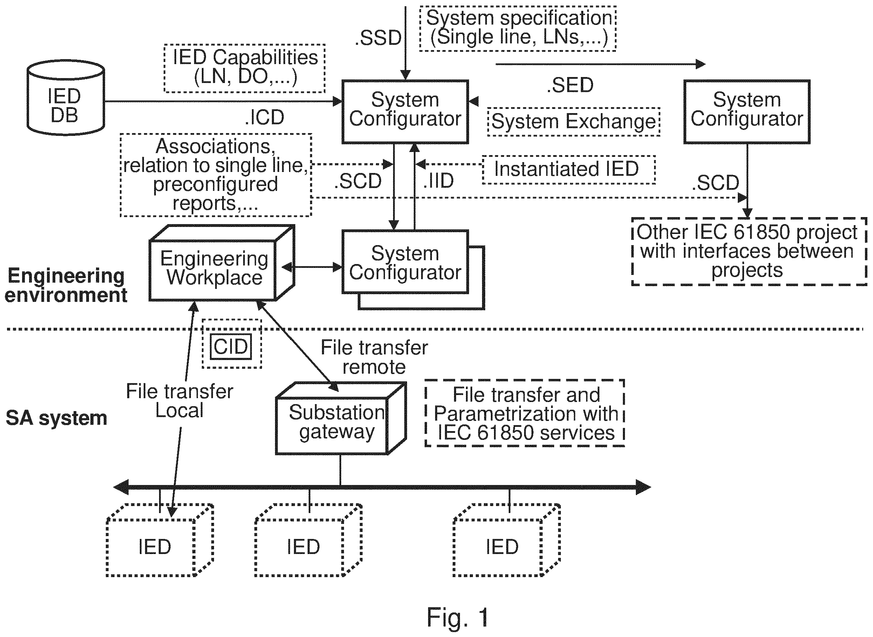

Fig. 1 shows an existing reference model for information flow in the configuration in IEC 61850 Part 6.

The reference model of Fig. 1 shows the information flow in the substation automation engineering process. It depicts how the different files, and the information are processed. The engineering process starts with a System Configurator tool, which looks at the system perspective. The tool imports the substation's single line diagram which is a basic illustration that shows the electrical components, their connections, and the flow of power within the substation. The IED capability templates, which describe the functional capabilities of an IED type are then imported. The engineer could also use existing lED configurations (Instantiated lED Descriptions) from past projects. The connection between the lED functions and substation components, as well as communication services and data flow among lEDs, are subsequently configured by the engineer. This eventually results in the so-called Substation Configuration Description (SCD) which has information about the power system, the communication services, the IEDs, and the information model. The SCD file is then given to the lED Configurator, which generates the Configured lED Description (CID) file which is then exported to the lED. The CID is a subset of the SCD file that contains all information connected to an lED. Private extensions are permitted in CID. The lED Configurator might also export a settings file that has information related to IEC Parameter settings, analog, and binary input/output configuration etc.

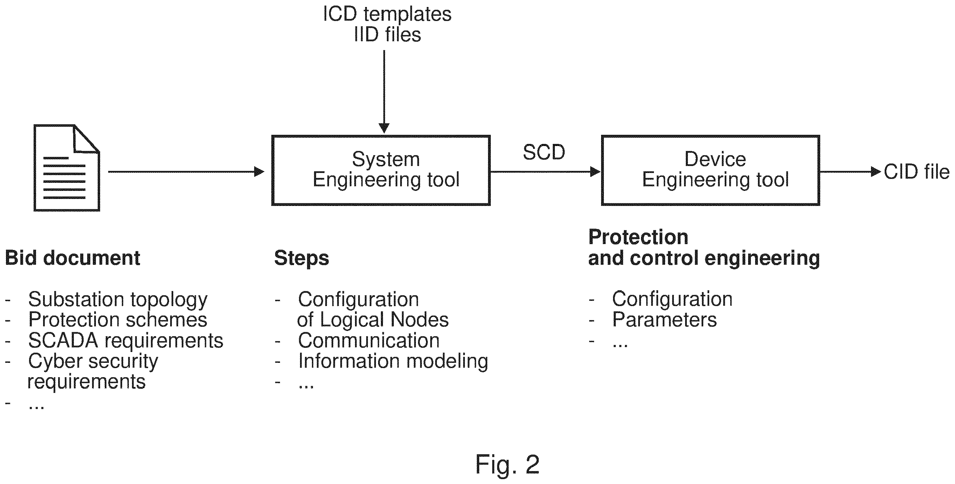

Fig. 2 shows an example of the existing whole process.

In Fig. 2 the following pertains:
ICD - lED Configuration Description (lED template)
IID - Instantiated lED Description (Preconfigured lED description)
CID - Configured lED Description (Configured IED description)
SCD - Substation Configuration Description

Referring to Fig. 2 the bid document contains information on the customer needs such as the substation topology at hand, the protection schemes they are interested in, and the cyber security requirements etc. This is a verbose document, which substation automation engineering experts use to understand the requirements and to determine the substation automation functions, lED types, communication configuration, data flows etc. This is eventually followed by system engineering with the system configurator, which necessitates knowledge of which ICD templates as well as previous project lED descriptions to use for engineering the SCD, that contains all the information necessary for the lED Configurator to derive the CID file. The whole process is complex and time consuming.

IEC 61850 Part 6 describes the reference model for information flow in the substation automation engineering process. However, before beginning the engineering process, the system engineers must first analyze the bid document that contains information on the customer needs such as the substation topology, the protection schemes they are interested in, and the cyber security requirements etc. This verbose bid document needs to be closely examined to ascertain the data flows, lED types, communication confirmation, and automation functions of the substation. Subsequently, they start the system engineering with the system configurator. This too requires familiarity with which ICD templates to utilize, and which lED descriptions from prior projects to employ while engineering the SCD that holds all the data required for the lED Configurator to generate the CID file.

The entire process is complex and time consuming.

There is a need to address these issues.

### SUMMARY OF THE INVENTION

Therefore, it would be advantageous to have an improved support tool for substation configuration whether for a new substation or a substation upgrade.

The object of the present invention is solved with the subject matter of the independent claims, wherein further embodiments are incorporated in the dependent claims.

In a first aspect, there is provided a substation automation engineering system, comprising:
- an input unit;
- a processing unit.

The input unit is configured to receive a base query, wherein the base query comprises details of a substation project. The input unit is configured to provide the base query to the processing unit. The processing unit is configured to determine one or more files in a database, the determination comprising searching the database to select the one or more files comprising utilization of the base query. The processing unit is configured to determine configuration description information for the substation project, the determination comprising utilization of the base query and the one or more files.

It is to be noted that the base query can constitute more than one piece of information.

Thus, a system or tool is provided that is not only useful for sales/OEMs, but also internally by R&D engineers, who can use this virtual setup to easily configure the physical devices of a substation and/or to test and validate the system.

In an example, the base query comprises one or more bid documents relating to a substation, and/or one or more line drawings relating to the substation, and/or one or more graphical layouts relating to the substation.

In an example, the system comprises an output unit, and the output unit is configured to output the configuration description information for the substation project.

In an example, the base query comprises information on a customer's need for a new substation or a customer's need for an upgrade of an existing substation.

In an example, the base query comprises information on the substation topology.

In an example, the base query comprises information on one or more protection schemes for the substation.

In an example, the base query comprises information on one or more cyber security requirements for the substation.

In an example, the base query comprises information on data flow requirements for the substation.

In an example, the base query comprises information on Intelligent Electronic device (IED) types for the substation.

In an example, the base query comprises information on communication requirements for the substation.

In an example, the base query comprises information on automation functions for the substation.

The base query can comprise one or more of the above and could even comprise all of the above. The base query as detailed above is not an exhaustive list, and there are other possible base queries as would be relevant.

In an example, the configuration description information comprises a system configuration (SCD) for the substation.

In an example, the configuration description information comprises one or more lED configuration for the substation.

In an example, the configuration description information comprises an Instantiated lED Description (IID) (Preconfigured lED description).

In an example, the configuration description information comprises an lED Configuration Description (ICD) (IED template).

In an example, the configuration description information comprises a Configured lED Description (CID) (Configured lED description).

In an example, the configuration description information comprises a configuration of one or more protection schemes for the substation.

In an example, the configuration description information comprises a configuration on one or more cyber security schemes for the substation.

In an example, the configuration description information comprises a configuration on one or more data flow schemes for the substation.

In an example, the configuration description information comprises details on and configurations of Intelligent Electronic device (IED) types for the substation.

In an example, the configuration description information comprises configurations on one or more communication schemes for the substation.

In an example, the configuration description information comprises configurations on automation functions for the substation.

The configuration description information can comprise one or more of the above and could even comprise all of the above. The configuration description information as detailed above is not an exhaustive list, and there are other form of possible configuration description information as would be relevant.

Thus, the engineering system can generate similar information, for a new substation project, to the information that was used as inputs to the engineering system.

In an example, the one or more files in the database comprises information on a previous bid for a substation project.

In an example, the one or more files in the database comprises information on a previous line drawing for a substation project.

In an example, the one or more files in the database comprises information on a previous graphical and/or line drawing for a substation project.

In an example, the one or more files in the database comprises information on a previous template for a substation project.

In an example, the one or more files in the database comprises information on a previous settings for a substation project.

In an example, the one or more files in the database comprises information on a previous configurations for a substation project.

In an example, the one or more files in the database comprises at least a part of a Substation Configuration Description (SCD).

In an example, the one or more files in the database comprises at least part of an Instantiated IED Description (IID) (Preconfigured lED description).

In an example, the one or more files in the database comprises at least part of an lED Configuration Description (ICD) (IED template).

In an example, the one or more files in the database comprises at least part of a Configured lED Description (CID) (Configured IED description).

In an example, the one or more files in the database comprises information on at least one setting.

In an example, the processing unit is configured to semantically assess the base query.

A new system is provided for the automated generation of a system configuration (SCD) as well as the Intelligent Electronic device (IED) configuration, from a base query, as well as for their setup.

In this manner the lead time from bidding to commissioning of new or retrofitted substation projects is reduced. Additionally, validation of the requirements with the client can be made at an early stage and any necessary adjustments can be made in a timely manner, which lowers engineering change costs at later stages.

Thus, starting with a bid document and/or a single line diagram and/or a graphical layout as a query, the automation framework provided by the system semantically assesses and understands the query, and finds similar, relevant files (SCD, IID, lCD, CID, Settings) by searching a knowledge base that has past engineering bids, single line diagrams, templates, settings, and configurations. The found files are then included as context to the base query to a pre trained Al engine, which generates SCD and CID files for a new substation or substation upgrade based on these inputs.

In an example, the determination of at least one file of the one or more files comprises utilization of one or more of: a text similarity algorithm, an image similarity algorithm, a multimodal similarity algorithm, a semantic and structure-based similarity algorithm.

In an example, the determination of at least one file of the one or more files comprises a determination of the at least one file based on a similarity with at least a part of the base query.

In an example, the determination of at least one file of the one or more files comprises a determination of at least one device or unit based on a similarity with at least a part of the base query, and wherein the at least one file is associated with the at least one device or unit. Here a device or unit can be an IED, a controller, a sensor, a valve, a relay, an actuator, a switch, an interconnector, a disconnector, or any other type of device or unit that is to be found in a substation.

Thus, the base query is used to interrogate the database, where details on devices and units of other exemplar substations for example is stored. The base query is used to identify one or more devices or units of these exemplar substations, and select one or more files that relate to these one or more devices or units. Thus, the files selected have been identified as having utility for the substation project and configuration description information for the substation project then makes use of the files thus selected.

In an example, the processing unit is configured to implement a trained Al engine to determine the configuration description information for the substation project.

In an example, the trained Al engine comprises a Large Language Model (LLM).

In an example, the processing unit is configured to parse the base query and the one or more files into a series of sequential requests and the determination of the configuration description information for the substation project comprises processing of the series of sequential requests by the trained Al engine.

In an example, the input unit is configured to provide information from a user to the processing unit, and the determination of the configuration description information for the substation project comprises utilization of the information from the user.

In an example, the processing unit is configured to determine intermediate information, the determination comprising utilization of the base query and the one or more files. The processing unit is configured to present a query to the user, the processing unit is configured to determine the query based on the intermediate information, and the information from the user is provided from the user in response to the query being presented to the user.

Thus, the processing unit uses the base query and one or more files to determine configuration description information that may not have a high confidence level as being exactly correct or determines that there is insufficient information to determine configuration description information - this can be considered to be the intermediate information. The intermediate information is used to determine a query, which could be a request to confirm details or provide more information. The processing unit can then utilize a VDU or other output unit to present the query to the user. The user can then use a keyboard or other input unit to provide information in response to the query. And the processing unit uses this information from the user in determining the configuration description information for the substation project.

In an example, the processing unit is configured to implement a virtual setup of a substation, the implementation comprising utilization of the configuration description information for the substation project.

In an example, the implementation of the virtual setup of the substation comprises a determination of one or more substation test scenarios, the determination comprising utilization of the configuration description information for the substation project.

In a second aspect, there is provided a substation automation engineering deployment and validation system, comprising:
- an input unit; and
- a processing unit.

The input unit is configured to receive the configuration description information for the substation project from the substation automation engineering system according to first aspect. The input unit is configured to provide the configuration description information for the substation project to the processing unit. The processing unit is configured to implement a virtual setup of a substation, the implementation comprising utilization of the configuration description information for the substation project.

In an example, the implementation of the virtual setup of the substation comprises a determination of one or more substation test scenarios, the determination comprising utilization of the configuration description information for the substation project.

In a third aspect, there is provided a substation automation engineering method, comprising:
- receiving a base query, wherein the base query comprises details of a substation project;
- determining by a processing unit one or more files in a database, the determining comprising searching the database and selecting the one or more files comprising utilizing the base query; and
- determining by the processing unit configuration description information for the substation project, the determination comprising utilizing the base query and the one or more files.

It is to be noted that the base query can constitute more than one piece of information.

In an example, the base query comprises one or more bid documents relating to a substation, and/or one or more line drawings relating to the substation, and/or one or more graphical layouts relating to the substation.

In an example, the base query comprises information on a customer's need for a new substation or a customer's need for an upgrade of an existing substation.

In an example, the base query comprises information on the substation topology.

In an example, the base query comprises information on one or more protection schemes for the substation.

In an example, the base query comprises information on one or more cyber security requirements for the substation.

In an example, the base query comprises information on data flow requirements for the substation.

In an example, the base query comprises information on Intelligent Electronic device (IED) types for the substation.

In an example, the base query comprises information on communication requirements for the substation.

In an example, the base query comprises information on automation functions for the substation.

The base query can comprise one or more of the above and could even comprise all of the above. The base query as detailed above is not an exhaustive list, and there are other possible base queries as would be relevant.

In an example, the configuration description information comprises a system configuration (SCD) for the substation.

In an example, the configuration description information comprises one or more lED configuration for the substation.

In an example, the configuration description information comprises an Instantiated IED Description (IID) (Preconfigured lED description).

In an example, the configuration description information comprises an lED Configuration Description (ICD) (IED template).

In an example, the configuration description information comprises a Configured lED Description (CID) (Configured IED description).

In an example, the configuration description information comprises a configuration of one or more protection schemes for the substation.

In an example, the configuration description information comprises a configuration on one or more cyber security schemes for the substation.

In an example, the configuration description information comprises a configuration on one or more data flow schemes for the substation.

In an example, the configuration description information comprises details on and configurations of Intelligent Electronic device (IED) types for the substation.

In an example, the configuration description information comprises configurations on one or more communication schemes for the substation.

In an example, the configuration description information comprises configurations on automation functions for the substation.

The configuration description information can comprise one or more of the above and could even comprise all of the above.

In an example, the one or more files in the database comprises information on a previous bid for a substation project.

In an example, the one or more files in the database comprises information on a previous line drawing for a substation project.

In an example, the one or more files in the database comprises information on a previous graphical and/or line drawing for a substation project.

In an example, the one or more files in the database comprises information on a previous template for a substation project.

In an example, the one or more files in the database comprises information on a previous settings for a substation project.

In an example, the one or more files in the database comprises information on a previous configurations for a substation project.

In an example, the one or more files in the database comprises at least a part of a Substation Configuration Description (SCD).

In an example, the one or more files in the database comprises at least part of an Instantiated lED Description (IID) (Preconfigured lED description).

In an example, the one or more files in the database comprises at least part of an lED Configuration Description (ICD) (IED template).

In an example, the one or more files in the database comprises at least part of a Configured lED Description (CID) (Configured IED description).

In an example, the one or more files in the database comprises information on at least one setting.

In an example, the processing unit is configured to semantically assess the base query.

A new method is provided for the automated generation of a system configuration (SCD) as well as the Intelligent Electronic device (IED) configuration, from a base query, as well as for their setup.

Thus, starting with a bid document and/or a single line diagram and/or a graphical layout as a query, the automation framework provided by the method semantically assesses and understands the query, and finds similar, relevant files (SCD, IID, lCD, CID, Settings) by searching a knowledge base that has past engineering bids, single line diagrams, templates, settings, and configurations. The found files are then included as context to the base query to a pre trained Al engine, which generates SCD and CID files for a new substation or substation upgrade based on these inputs.

In an example, the determining the at least one file of the one or more files comprises utilizing one or more of: a text similarity algorithm, an image similarity algorithm, a multimodal similarity algorithm, a semantic and structure-based similarity algorithm.

In an example, the determining the at least one file of the one or more files comprises determining the at least one file based on a similarity with at least a part of the base query.

In an example, the determining at least one file of the one or more files comprises determining at least one system based on a similarity with at least a part of the base query, and wherein the at least one file is associated with the at least one system.

In an example, the method comprises implementing by the processing unit a trained Al engine to determine the configuration description information for the substation project.

In an example, the trained Al engine comprises a Large Language Model (LLM).

In an example, the method comprises parsing by the processing unit the base query and the one or more files into a series of sequential requests and the determining the configuration description information for the substation project comprises processing the series of sequential requests by the trained Al engine.

In an example, the method comprises receiving information from a user, and wherein the determining the configuration description information for the substation project comprises utilizing the information from the user.

In an example, the method comprises determining by the processing unit intermediate information, the determining comprising utilizing the base query and the one or more files, wherein the method comprises determining by the processing unit a query based on the intermediate information and presenting the query to the user, and wherein the information from the user is provided from the user in response to the query being presented to the user.

Thus, the processing unit uses the base query and one or more files to determine configuration description information that may not have a high confidence level as being exactly correct or determines that there is insufficient information to determine configuration description information - this can be considered to be the intermediate information. The intermediate information is used to determine a query, which could be a request to confirm details or provide more information. The processing unit can then utilize a visual display unit (VDU) or other output unit to present the query to the user. The user can then use a keyboard or other input unit to provide information in response to the query. And the processing unit uses this information from the user in determining the configuration description information for the substation project.

In an example, the method comprises implementing by the processing unit a virtual setup of a substation, the implementing comprising utilizing the configuration description information for the substation project.

In an example, the implementing the virtual setup of the substation comprises determining one or more substation test scenarios, the determining comprising utilizing the configuration description information for the substation project.

In a fourth aspect there is provided a substation automation engineering deployment and validation method, comprising:
- receiving by a processing unit the configuration description information for the substation project from the substation automation engineering method according to the third aspect; and
- implementing by the processing unit a virtual setup of a substation, the implementing comprising utilizing the configuration description information for the substation project.

In an example, the implementing the virtual setup of the substation comprises determining one or more substation test scenarios, the determining comprising utilizing the configuration description information for the substation project.

In a fifth aspect, there is provided a computer program element for controlling a processor to carry out the method according to the third aspect.

In an example, there is provided a computer readable medium having stored the computer element of the fifth aspect.

In a sixth aspect, there is provided a computer program element for controlling a processor to carry out the method according to the fourth aspect.

In an example, there is provided a computer readable medium having stored the computer element of the sixth aspect.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an example of the status quo with respect to information flow in engineering and shows a known reference model for information flow in the configuration process;
Fig. 2 shows an example of the status quo for lED configuration;
Fig. 3 shows an exemplar substation automation engineering system, where processing unit 50 is optional and where processing unit 50 can be a part of processing unit 20, and Fig. 3 also relates to an exemplar substation automation engineering deployment and validation system where the processing unit 50 receives the output from the processing unit 20;
Fig. 4 shows an exemplar substation automation engineering method, where step 600 is optional and where step 600 can be a part of step 500, and Fig. 4 also shows an example of an exemplar substation automation engineering deployment and validation method where the output from step 500 is processed at step 600;
Fig. 5 shows a detailed example of a substation automation engineering system that can also operate as a substation automation engineering deployment and validation system;
Fig. 6 shows detailed example of a database 30 in the form of one or more vector databases; and
Fig. 7 shows a detailed example of a substation automation engineering system that can also operate as a substation automation engineering deployment and validation system.

### DETAILED DESCRIPTION OF EMBODIMENTS

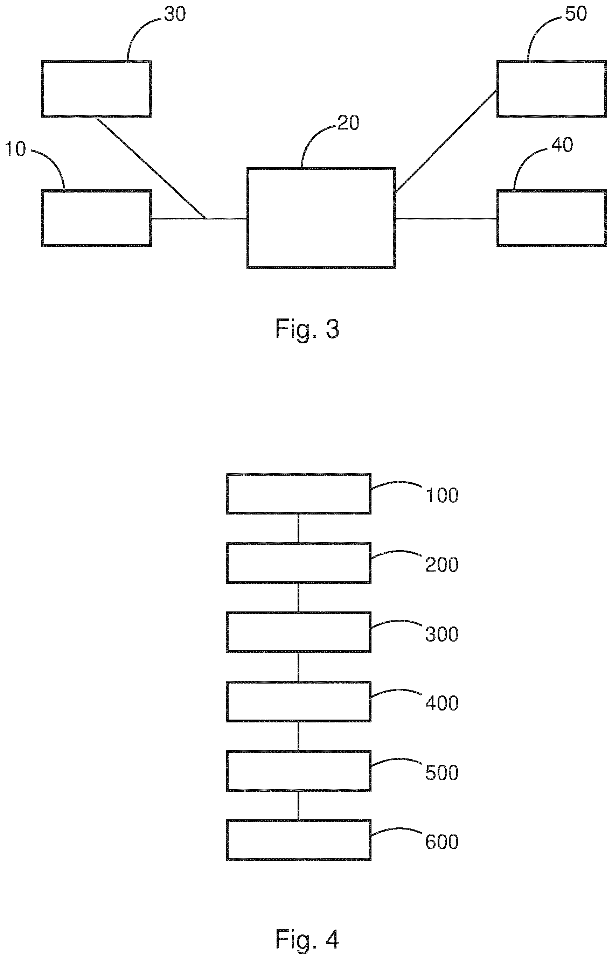

Fig. 3 shows an example of a substation automation engineering system, comprising:
- an input unit 10; and
- a processing unit 20.

The input unit is configured to receive a base query, wherein the base query comprises details of a substation project. The input unit is configured to provide the base query to the processing unit. The processing unit is configured to determine one or more files in a database 30, the determination comprising searching the database 30 to select the one or more files comprising utilization of the base query. The processing unit is configured to determine configuration description information for the substation project, the determination comprising utilization of the base query and the one or more files.

Thus, a system or tool is provided that is not only useful for sales/OEMs, but also internally by R&D engineers, who can use this virtual setup to easily configure the physical devices of a substation and/or to test and validate the system.

Fig. 3 shows processing unit 50, but the substation automation engineering system need not have this processing unit, and the functionality of processing unit 50 can be provided by processing unit 20. The processing unit 50 could be part of an external server or even provided by cloud computing. Also, the database 30 is not required to be part of the system, and is interrogated to determine the one or more files, but the database could be part of the system and could for example be in a memory associated with processing unit 50.

It is to be noted that the base query can constitute more than one piece of information.

In an example, the base query comprises one or more bid documents relating to a substation, and/or one or more line drawings relating to the substation, and/or one or more graphical layouts relating to the substation.

In an example, the system comprises an output unit 40, and the output unit is configured to output the configuration description information for the substation project.

In an example, the base query comprises information on a customer's need for a new substation or a customer's need for an upgrade of an existing substation.

In an example, the base query comprises information on the substation topology.

In an example, the base query comprises information on one or more protection schemes for the substation.

In an example, the base query comprises information on one or more cyber security requirements for the substation.

In an example, the base query comprises information on data flow requirements for the substation.

In an example, the base query comprises information on Intelligent Electronic device (IED) types for the substation.

In an example, the base query comprises information on communication requirements for the substation.

In an example, the base query comprises information on automation functions for the substation.

The base query can comprise one or more of the above and could even comprise all of the above. The base query as detailed above is not an exhaustive list, and there are other possible base queries as would be relevant.

In an example, the configuration description information comprises a system configuration (SCD) for the substation.

In an example, the configuration description information comprises one or more lED configuration for the substation.

In an example, the configuration description information comprises an Instantiated lED Description (IID) (Preconfigured lED description).

In an example, the configuration description information comprises an lED Configuration Description (ICD) (IED template).

In an example, the configuration description information comprises a Configured lED Description (CID) (Configured lED description).

In an example, the configuration description information comprises a configuration of one or more protection schemes for the substation.

In an example, the configuration description information comprises a configuration on one or more cyber security schemes for the substation.

In an example, the configuration description information comprises a configuration on one or more data flow schemes for the substation.

In an example, the configuration description information comprises details on and configurations of Intelligent Electronic device (IED) types for the substation.

In an example, the configuration description information comprises configurations on one or more communication schemes for the substation.

In an example, the configuration description information comprises configurations on automation functions for the substation.

The configuration description information can comprise one or more of the above and could even comprise all of the above.

In an example, the one or more files in the database comprises information on a previous bid for a substation project.

In an example, the one or more files in the database comprises information on a previous line drawing for a substation project.

In an example, the one or more files in the database comprises information on a previous graphical and/or line drawing for a substation project.

In an example, the one or more files in the database comprises information on a previous template for a substation project.

In an example, the one or more files in the database comprises information on a previous settings for a substation project.

In an example, the one or more files in the database comprises information on a previous configurations for a substation project.

In an example, the one or more files in the database comprises at least a part of a Substation Configuration Description (SCD).

In an example, the one or more files in the database comprises at least part of an Instantiated lED Description (IID) (Preconfigured lED description).

In an example, the one or more files in the database comprises at least part of an lED Configuration Description (ICD) (IED template).

In an example, the one or more files in the database comprises at least part of a Configured lED Description (CID) (Configured IED description).

In an example, the one or more files in the database comprises information on at least one setting.

In an example, the processing unit is configured to semantically assess the base query.

A new system is provided for the automated generation of a system configuration (SCD) as well as the Intelligent Electronic device (IED) configuration, from a base query, as well as for their setup.

In this manner the lead time from bidding to commissioning of new or retrofitted substation projects is reduced. Additionally, validation of the requirements with the client can be made at an early stage and any necessary adjustments can be made in a timely manner, which lowers engineering change costs at later stages.

Thus, starting with a bid document and/or a single line diagram and/or a graphical layout as a query, the automation framework provided by the system semantically assesses and understands the query, and finds similar, relevant files (SCD, IID, ICD, CID, Settings) by searching a knowledge base that has past engineering bids, single line diagrams, templates, settings, and configurations. The found files are then included as context to the base query to a pre trained Al engine, which generates SCD and CID files for a new substation or substation upgrade based on these inputs.

In an example, the determination of at least one file of the one or more files comprises utilization of one or more of: a text similarity algorithm, an image similarity algorithm, a multimodal similarity algorithm, a semantic and structure-based similarity algorithm.

In an example, the determination of at least one file of the one or more files comprises a determination of the at least one file based on a similarity with at least a part of the base query.

In an example, the determination of at least one file of the one or more files comprises a determination of at least one device or unit based on a similarity with at least a part of the base query, and wherein the at least one file is associated with the at least one device or unit.

Thus, the base query is used to interrogate the database, where details on devices and units of other exemplar substations for example is stored. The base query is used to identify one or more devices or units of these exemplar substations, and select one or more files that relate to these one or more devices or units. Thus, the files selected have been identified as having utility for the substation project and configuration description information for the substation project then makes use of the files thus selected.

In an example, the processing unit is configured to implement a trained Al engine to determine the configuration description information for the substation project.

In an example, the trained Al engine comprises a Large Language Model (LLM).

In an example, the processing unit is configured to parse the base query and the one or more files into a series of sequential requests and the determination of the configuration description information for the substation project comprises processing of the series of sequential requests by the trained Al engine.

In an example, the input unit is configured to provide information from a user to the processing unit, and the determination of the configuration description information for the substation project comprises utilization of the information from the user.

In an example, the processing unit is configured to determine intermediate information, the determination comprising utilization of the base query and the one or more files. The processing unit is configured to present a query to the user, the processing unit is configured to determine the query based on the intermediate information, and the information from the user is provided from the user in response to the query being presented to the user.

Thus, the processing unit uses the base query and one or more files to determine configuration description information that may not have a high confidence level as being exactly correct or determines that there is insufficient information to determine configuration description information - this can be considered to be the intermediate information. The intermediate information is used to determine a query, which could be a request to confirm details or provide more information. The processing unit can then utilize a VDU or other output unit to present the query to the user. The user can then use a keyboard or other input unit to provide information in response to the query. And the processing unit uses this information from the user in determining the configuration description information for the substation project.

In an example, the processing unit is configured to implement a virtual setup of a substation, the implementation comprising utilization of the configuration description information for the substation project.

In an example, the implementation of the virtual setup of the substation comprises a determination of one or more substation test scenarios, the determination comprising utilization of the configuration description information for the substation project.

Fig. 3 also shows an example of a substation automation engineering deployment and validation system, comprising:
- an input unit 10; and
- a processing unit 50.

The input unit is configured to receive the configuration description information for the substation project from the substation automation engineering system as described above. The input unit is configured to provide the configuration description information for the substation project to the processing unit. The processing unit is configured to implement a virtual setup of a substation, the implementation comprising utilization of the configuration description information for the substation project.

Thus, referring to Fig. 3, the processing unit 20 outputs the configuration description information that is provided to the processing unit 50, by an input unit similar to input unit 10 as shown in Fig. 3, and the processing unit 50 uses the configuration description information to implement a virtual setup of a substation. Thus, the substation automation engineering assessment system does not have the processing unit 20 or the database 30 or need to access such a database. The processing unit 50 could be part of an external server or even provided by cloud computing.

In an example, the implementation of the virtual setup of the substation comprises a determination of one or more substation test scenarios, the determination comprising utilization of the configuration description information for the substation project.

Fig. 4 an example of a substation automation engineering method, comprising:
- receiving 100 a base query, wherein the base query comprises details of a substation project;
- determining 200 by a processing unit one or more files in a database, the determining comprising searching 300 the database and selecting 400 the one or more files comprising utilizing the base query; and
- determining 500 by the processing unit configuration description information for the substation project, the determination comprising utilizing the base query and the one or more files.

Fig. 4 shows step 600, but the method need not have this separate step. Step 600 can utilize a processing unit 20 that is also used in steps 200-500, but step 600 can utilize processing unit 50, that is different to processing unit 20, where processing unit 50 could be part of an external server or even provided by cloud computing.

It is to be noted that the base query can constitute more than one pieces of information.

In an example, the base query comprises one or more bid documents relating to a substation, and/or one or more line drawings relating to the substation, and/or one or more graphical layouts relating to the substation.

In an example, the base query comprises information on a customer's need for a new substation or a customer's need for an upgrade of an existing substation.

In an example, the base query comprises information on the substation topology.

In an example, the base query comprises information on one or more protection schemes for the substation.

In an example, the base query comprises information on one or more cyber security requirements for the substation.

In an example, the base query comprises information on data flow requirements for the substation.

In an example, the base query comprises information on Intelligent Electronic device (IED) types for the substation.

In an example, the base query comprises information on communication requirements for the substation.

In an example, the base query comprises information on automation functions for the substation.

The base query can comprise one or more of the above and could even comprise all of the above. The base query as detailed above is not an exhaustive list, and there are other possible base queries as would be relevant.

In an example, the configuration description information comprises a system configuration (SCD) for the substation.

In an example, the configuration description information comprises one or more lED configuration for the substation.

In an example, the configuration description information comprises an Instantiated IED Description (IID) (Preconfigured lED description).

In an example, the configuration description information comprises an lED Configuration Description (ICD) (IED template).

In an example, the configuration description information comprises a Configured lED Description (CID) (Configured IED description).

In an example, the configuration description information comprises a configuration of one or more protection schemes for the substation.

In an example, the configuration description information comprises a configuration on one or more cyber security schemes for the substation.

In an example, the configuration description information comprises a configuration on one or more data flow schemes for the substation.

In an example, the configuration description information comprises details on and configurations of Intelligent Electronic device (IED) types for the substation.

In an example, the configuration description information comprises configurations on one or more communication schemes for the substation.

In an example, the configuration description information comprises configurations on automation functions for the substation.

The configuration description information can comprise one or more of the above and could even comprise all of the above.

In an example, the one or more files in the database comprises information on a previous bid for a substation project.

In an example, the one or more files in the database comprises information on a previous line drawing for a substation project.

In an example, the one or more files in the database comprises information on a previous graphical and/or line drawing for a substation project.

In an example, the one or more files in the database comprises information on a previous template for a substation project.

In an example, the one or more files in the database comprises information on a previous settings for a substation project.

In an example, the one or more files in the database comprises information on a previous configurations for a substation project.

In an example, the one or more files in the database comprises at least a part of a Substation Configuration Description (SCD).

In an example, the one or more files in the database comprises at least part of an Instantiated lED Description (IID) (Preconfigured lED description).

In an example, the one or more files in the database comprises at least part of an lED Configuration Description (ICD) (IED template).

In an example, the one or more files in the database comprises at least part of a Configured lED Description (CID) (Configured IED description).

In an example, the one or more files in the database comprises information on at least one setting.

In an example, the processing unit is configured to semantically assess the base query.

A new method is provided for the automated generation of a system configuration (SCD) as well as the Intelligent Electronic device (IED) configuration, from a base query, as well as for their setup.

Thus, starting with a bid document and/or a single line diagram and/or a graphical layout as a query, the automation framework provided by the method semantically assesses and understands the query, and finds similar, relevant files (SCD, IID, lCD, CID, Settings) by searching a knowledge base that has past engineering bids, single line diagrams, templates, settings, and configurations. The found files are then included as context to the base query to a pre trained Al engine, which generates SCD and CID files for a new substation or substation upgrade based on these inputs.

In an example, the determining the at least one file of the one or more files comprises utilizing one or more of: a text similarity algorithm, an image similarity algorithm, a multimodal similarity algorithm, a semantic and structure-based similarity algorithm.

In an example, the determining the at least one file of the one or more files comprises determining the at least one file based on a similarity with at least a part of the base query.

In an example, the determining at least one file of the one or more files comprises determining at least one system based on a similarity with at least a part of the base query, and wherein the at least one file is associated with the at least one system.

In an example, the method comprises implementing by the processing unit a trained Al engine to determine the configuration description information for the substation project.

In an example, the trained Al engine comprises a Large Language Model (LLM).

In an example, the method comprises parsing by the processing unit the base query and the one or more files into a series of sequential requests and the determining the configuration description information for the substation project comprises processing the series of sequential requests by the trained Al engine.

In an example, the method comprises receiving information from a user, and wherein the determining the configuration description information for the substation project comprises utilizing the information from the user.

In an example, the method comprises determining by the processing unit intermediate information, the determining comprising utilizing the base query and the one or more files, wherein the method comprises determining by the processing unit a query based on the intermediate information and presenting the query to the user, and wherein the information from the user is provided from the user in response to the query being presented to the user.

Thus, the processing unit uses the base query and one or more files to determine configuration description information that may not have a high confidence level as being exactly correct or determines that there is insufficient information to determine configuration description information - this can be considered to be the intermediate information. The intermediate information is used to determine a query, which could be a request to confirm details or provide more information. The processing unit can then utilize a VDU or other output unit to present the query to the user. The user can then use a keyboard or other input unit to provide information in response to the query. And the processing unit uses this information from the user in determining the configuration description information for the substation project.

In an example, the method comprises implementing 600 by the processing unit a virtual setup of a substation, the implementing comprising utilizing the configuration description information for the substation project. Thus, here step 600 utilizes the same processing unit as involved in steps 200-500.

In an example, the implementing the virtual setup of the substation comprises determining one or more substation test scenarios, the determining comprising utilizing the configuration description information for the substation project.

Fig. 4 also shows an example of a substation automation engineering deployment and validation method, comprising:
- receiving by a processing unit the configuration description information for the substation project from the substation automation engineering method as determined at step 500; and
- implementing 600 by the processing unit a virtual setup of a substation, the implementing comprising utilizing the configuration description information for the substation project.

Thus, referring to Fig. 4, the processing unit 20 at step 500 outputs the configuration description information that is provided to the processing unit 50 that uses the configuration description information to implement a virtual setup of a substation at step 600. Thus, the substation automation engineering deployment and validation method does not utilize the processing unit 20 or the database 30 or need to access such a database. The processing unit 50 utilized at step 600 could be part of an external server or even provided by cloud computing.

In an example, the implementing the virtual setup of the substation comprises determining one or more substation test scenarios, the determining comprising utilizing the configuration description information for the substation project.

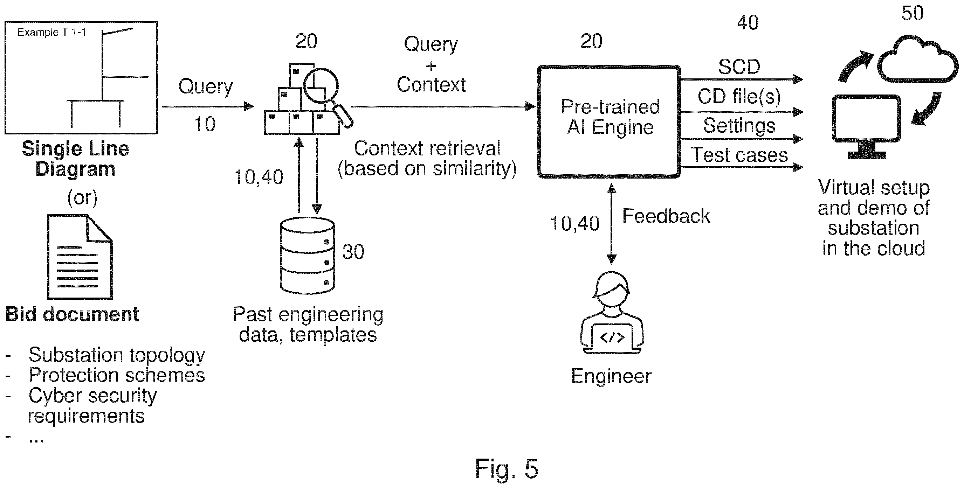

The substation automation engineering system, the substation automation engineering deployment and validation system, the substation automation engineering method, and the substation automation engineering deployment and validation method are now discussed in further detail with respect to specific embodiments, where reference is made to Figs. 5-7.

The new development provides an Al-based approach for automated generation of a system configuration as well as the lED configuration from a bid document and their automated deployment in a virtually commissioned setup. This helps to reduce the lead time from bidding to commissioning of new or retrofitted substation projects. Additionally, it helps to validate the requirements with the client early and make any necessary adjustments, which lowers engineering change costs at later stages.

Starting with either a bid document and/or a single line diagram and/or a graphical layout as a query, the automation framework semantically assesses and understands the query, and finds similar, relevant files (SCD, IID, ICD, CID, Settings) by searching a knowledge base that has past engineering bids, single line diagrams, templates, settings, and configurations.

The found files are then included as the "context" to the query made to a pre trained Al engine, which generates the SCD and CID files based on the inputs. The SCD, CID, and settings files are then deployed in a virtual setup, in a server computing cluster or cloud, where the customer can get a feeling on how such a system would look like, and maybe also re-configure some of the functionalities with test cases that are generated by the Al engine.

This results in a tool which is not only useful for sales, but also internally by Research and Development engineers, who can use this virtual setup to easily configure the physical devices.

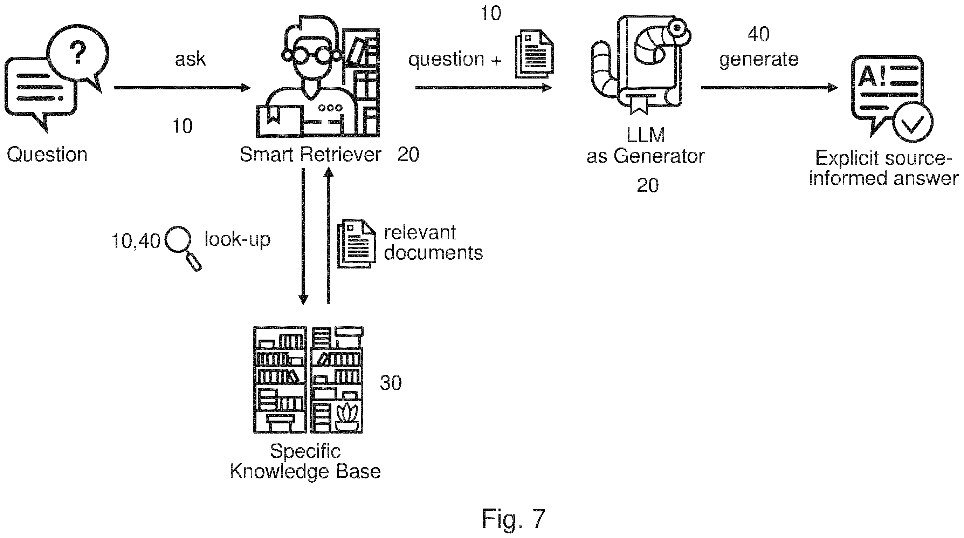

Figs. 5, and 7 and show examples of such a substation automation engineering system that can also operate as a substation automation engineering deployment and validation system.

The new development can utilize RAG (retrieval-augmented generation), however, specified and fine-tuned for SCD file and for the Al-assisted substation automation engineering.

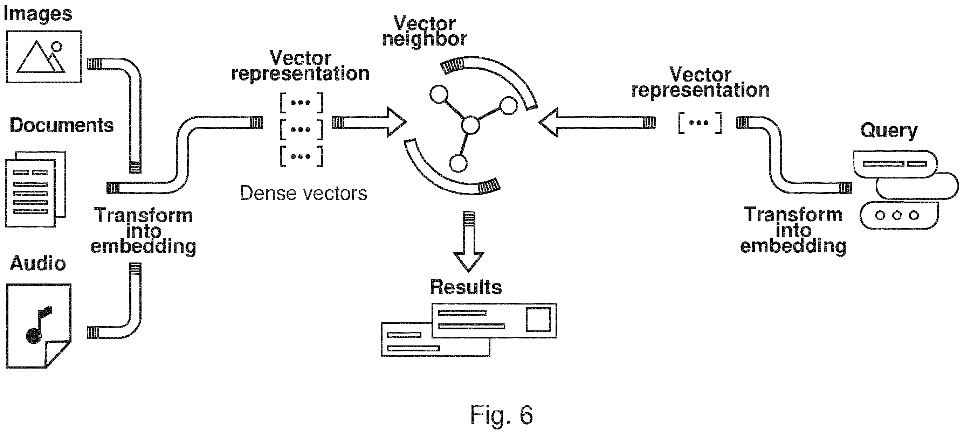

The context retrieval system can be realized by creating embeddings of the whole or chunks of the bid document and by using text similarity (for bid documents) or image similarity algorithms (for Single Line Diagrams) to find similar systems and their configurations from a vector database that indexes and stores vector embeddings of engineering data and templates from past projects. An example of such a database is shown in Fig. 6. For XML documents (such as SCD, CID) semantic and structure-based similarity algorithms can be used for retrieving related configurations. The contextual information thus received can be fed to the pre-trained Al Engine (Large Language Model) to generate the responses. The Al Engine can request feedback from the engineer on certain missing information, or on the quality of the responses produced. The virtual setup can be realized using virtualized lEDs running in virtual machines or inside containers.

The structure of the SCD format is well-defined and unique. Hence, a pre-trained instruction-tuned Large Language Model (LLM) can be fine-tuned on the I/O schema (using this format and structure), so it provides consistently formatted/structured outputs.

Furthermore, to address the challenges and limitations of LLMs (Language Model Models), which are posed by the complexity of the given I/O schema and generation task, there are several techniques available: E.g., state-of-the-art chunking strategies allow for intelligently dividing structured and formatted files-such as XML-into chunks based on their inherent structure and hierarchy. This process results in more semantically coherent chunks, which in turn facilitate a more rapid and accurate retrieval of content related to specific queries.

E.g., if the length of the to-be-processed file is too large for current LLM capabilities (they have e.g. token limits), these need to be sub-divided, e.g., using hierarchical chunking (parent - children combinations, etc.). This can be done by training (i.e., fine-tuning) an instruction-tuned model M_0 to create the basic blocks of an SCD. And train (i.e., fine-tune) another (or several) instruction-tuned model(s) M_1 (... M_n) to generate the respective contents of these basic blocks of an SCD.

Thus, in summary, the basic idea is: Make use of Retrieval-Augmented Generation (RAG) and of Fine-Tuning - both are well-known technologies - for improving the output generation of the Al model. We here specify HOW, (e.g., using pre-trained instruction-tuned models and using chunking strategies) and using WHICH documents:
- A System and Method for Al-assisted substation automation engineering has been developed.
- A detailed embodiment of the system can be based on RAG (retrieval-augmented generation), however, specified and fine-tuned (e.g., starting from a pre-trained instruction-tuned model) for SCD files, and for the Al-assisted substation automation engineering, using the above-described sets of documents and historical project data!
- The system also includes a domain-knowledge-based hierarchical context chunking method to cope with large file sizes / long contents.
- The overall task is sub-divided into different queries, i.e., a series of sequential requests to the LLM(s).

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

### Reference Numerals

- 10: Input Unit
- 20: Processing Unit
- 30: Database
- 40: Output unit
- 50: Processing Unit
- 60: Output Unit
- 100-500: Method steps
- 100-600: Method steps

## Claims

1. A substation automation engineering system, comprising:
- an input unit (10); and
- a processing unit (20);
wherein the input unit is configured to receive a base query, wherein the base query comprises details of a substation project;
wherein the input unit is configured to provide the base query to the processing unit;
wherein the processing unit is configured to determine one or more files in a database (30), the determination comprising searching the database (30) to select the one or more files comprising utilization of the base query; and
wherein the processing unit is configured to determine configuration description information for the substation project, the determination comprising utilization of the base query and the one or more files.

2. System according to claim 1, wherein the determination of at least one file of the one or more files comprises utilization of one or more of: a text similarity algorithm, an image similarity algorithm, a multimodal similarity algorithm, a semantic and structure-based similarity algorithm.

3. System according to any of claims 1-2, wherein the determination of at least one file of the one or more files comprises a determination of the at least one file based on a similarity with at least a part of the base query.

4. System according to any of claims 1-3, wherein the determination of at least one file of the one or more files comprises a determination of at least one device or unit based on a similarity with at least a part of the base query, and wherein the at least one file is associated with the at least one device or unit.

5. System according to any of claims 1-4, wherein the processing unit is configured to implement a trained Al engine to determine the configuration description information for the substation project.

6. System according to any of claims 1-5, wherein the input unit is configured to provide information from a user to the processing unit, and wherein the determination of the configuration description information for the substation project comprises utilization of the information from the user.

7. System according to claim 6, wherein the processing unit is configured to determine intermediate information, the determination comprising utilization of the base query and the one or more files, wherein the processing unit is configured to present a query to the user, wherein the processing unit is configured to determine the query based on the intermediate information, and wherein the information from the user is provided from the user in response to the query being presented to the user.

8. System according to any of claims 1-7, wherein the processing unit is configured to implement a virtual setup of a substation, the implementation comprising utilization of the configuration description information for the substation project.

9. System according to claim 8, wherein the implementation of the virtual setup of the substation comprises a determination of one or more substation test scenarios, the determination comprising utilization of the configuration description information for the substation project.

10. A substation automation engineering deployment and validation system, comprising:
- an input unit (10); and
- a processing unit (50);
wherein the input unit is configured to receive the configuration description information for the substation project from the substation automation engineering system according to any of claims 1-7;
wherein the input unit is configured to provide the configuration description information for the substation project to the processing unit; and
wherein the processing unit is configured to implement a virtual setup of a substation, the implementation comprising utilization of the configuration description information for the substation project.

11. System according to claim 10, wherein the implementation of the virtual setup of the substation comprises a determination of one or more substation test scenarios, the determination comprising utilization of the configuration description information for the substation project.

12. A substation automation engineering method, comprising:
- receiving (100) a base query, wherein the base query comprises details of a substation project;
- determining (200) by a processing unit one or more files in a database, the determining comprising searching (300) the database and selecting (400) the one or more files comprising utilizing the base query; and
- determining (500) by the processing unit configuration description information for the substation project, the determination comprising utilizing the base query and the one or more files.

13. Method according to claim 12, the method comprising implementing (600) by the processing unit a virtual setup of a substation, the implementing comprising utilizing the configuration description information for the substation project.

14. A substation automation engineering deployment and validation method, comprising:
- receiving by a processing unit the configuration description information for the substation project from the substation automation engineering method according to claim 12; and
- implementing by the processing unit a virtual setup of a substation, the implementing comprising utilizing the configuration description information for the substation project.

15. A computer program element for controlling a processor to carry out the method of any of claims 12-13 or for controlling a processor to carry out the method of claim 14.
